(19) Europäisches Patentamt / European Patent Office / Office européen des brevets

(11) **EP 4 191 413 A1**

(12) **EUROPEAN PATENT APPLICATION**
published in accordance with Art. 153(4) EPC

(43) Date of publication:
**07.06.2023 Bulletin 2023/23**

(21) Application number: **21855093.7**

(22) Date of filing: **23.03.2021**

(51) International Patent Classification (IPC):
**G06F 9/54** (2006.01)

(52) Cooperative Patent Classification (CPC):
**G06F 9/48; G06F 9/50; G06F 9/54**

(86) International application number:
**PCT/CN2021/082229**

(87) International publication number:
**WO 2022/033037 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.08.2020 CN 202010823536**

(71) Applicant: **Huawei Technologies Co., Ltd.**
**Shenzhen, Guangdong 518129 (CN)**

(72) Inventors:
- **CHI, Jianchun**
  **Shenzhen, Guangdong 518129 (CN)**
- **ZHENG, Wei**
  **Shenzhen, Guangdong 518129 (CN)**
- **RUAN, Chao**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **MESSAGE MANAGEMENT METHOD, DEVICE, AND SERVERLESS SYSTEM**

(57) A serverless system includes a message management apparatus. The message management apparatus may receive a first message, where the first message is used to indicate to schedule a first stateful function to operate a first state instance; store the first message in a first message queue corresponding to the first state instance, where the first message queue is further used to store a plurality of messages, and each of the plurality of messages is used to indicate one stateful function to operate the first state instance; and transfer a second message to a second stateful function corresponding to the second message, and run the second stateful function corresponding to the second message to operate the first state instance in an idle state, where the second message is a message located at a foremost end of the first message queue. Time-shared operations performed by different stateful functions on a state instance are controlled in a message management manner. A stateful function operates a state instance only after obtaining a message for operating the state instance, thereby avoiding a resource waste.

FIG. 3

**Description**

This application claims priority to Chinese Patent Application No. 202010823536.9, filed with the China National Intellectual Property Administration on August 13, 2020 and entitled "MESSAGE MANAGEMENT METHOD AND APPARATUS, AND SERVERLESS SYSTEM", which is incorporated herein by reference in its entirety.

**TECHNICAL FIELD**

This application relates to the field of computer technologies, and in particular, to a message management method and apparatus, and a serverless system.

**BACKGROUND**

Serverless (serverless) indicates that a cloud manufacturer provides resources for function running and dynamically manages resource allocation. A user can write a function in a serverless mode, without purchasing, in advance, a server running the function. A running location of the function on the cloud is controlled by a cloud platform. A main feature of the cloud platform is on-demand deployment. When a service requirement exists, a function is quickly deployed to quickly process a service.

Functions running on the cloud usually include a stateless function and a stateful function. The stateless function indicates that state data in a running process of the function cannot be retained, and each time of running of the function does not depend on state data of previous running. The state data is transient data or context data in the running process of the function. The stateful function indicates that state data in a running process of the function can be retained, and the state data can be operated next time the function runs.

The state data is included in a state instance. State data in a state instance can be modified, but an identifier of the state instance does not change. One state instance can be operated by only one function at one moment. If two different stateful functions need to use a same state instance, the state instance needs to be operated in a lock manner. For example, both a stateful function B and a stateful function C need to operate a state instance S. If the stateful function B first operates the state instance S, the stateful function B locks the state instance S to prevent the state instance S from being modified by another function. If the stateful function C also needs to operate the state instance S, a resource for operating the state instance S is prepared. However, before the stateful function B unlocks the state instance S, the stateful function C cannot operate the state instance S, and can only wait for the stateful function B to unlock the state instance S. In a waiting process, the stateful function C still always occupies the resource prepared for operating the state instance S, causing a resource waste.

**SUMMARY**

Embodiments of this application provide a serverless system, to control, in a message management manner, time-shared operations performed by different stateful functions on a state instance. A stateful function starts to operate a state instance only after obtaining a message for operating the state instance, and does not need to occupy a resource to wait for a stateful function that is operating the state instance to unlock the state instance, thereby avoiding a resource waste. The embodiments of this application further provide a corresponding message management method and apparatus.

A first aspect of this application provides a serverless system, including a message management apparatus. The message management apparatus is configured to: receive a first message, where the first message is used to indicate to schedule a first stateful function to operate a first state instance; store the first message in a first message queue corresponding to the first state instance, where the first message queue is further used to store a plurality of messages, and each of the plurality of messages is used to indicate one stateful function to operate the first state instance; and transfer a second message to a second stateful function corresponding to the second message, and run the second stateful function corresponding to the second message to operate the first state instance in an idle state, where the second message is a message located at a foremost end of the first message queue.

In the first aspect, the serverless system may be a clustered system, including a control node and working nodes. There are one or more control nodes, and there are a plurality of working nodes. Usually, one control node manages a plurality of working nodes. In this application, "a plurality of" includes "two", and "a plurality of" may also be described as "at least two". The message management apparatus (state message manager) may be located in a working node. One working node may include one message management apparatus; or some working nodes may include message management apparatuses, and some working nodes may not include message management apparatuses. When some working nodes do not include message management apparatuses, the message management apparatus may correspondingly manage state instances and stateful functions in a plurality of working nodes. The message management apparatus may be an instance (instance) or a container (container). The first message may include an identifier (state ID) of the first state instance and a function name of the first stateful function. The stateful function indicates that state data in a running process of the function can be retained, and the state data can be operated next time the function runs. The state data is transient data or context data in the running process of the function. The state data is included in a state instance. State data in a state instance can be modified, but an identifier of the state instance does not change. That the first message queue is used to store a plurality of messages indicates that the first message queue can store a plurality of messages instead of indicating that the first message queue currently stores a plurality of messages. A message in the first message queue may be dequeued. Therefore, within one moment, the first message queue may have one message, may have a plurality of messages, or may have no message. The second message may enter the first message queue earlier than the first message. If there is no message in the first message queue when the first message enters the first message queue, the second message is the first message, and the second stateful function corresponding to the second message is the first stateful function. A first-in-first-out rule is used for the message in the first message queue. That the second message is located at the foremost end of the first message queue indicates that the second message enters the first message queue earlier than another message currently included in the first message queue. That the first state instance is in an idle state indicates that the first state instance is not operated by another stateful function associated with the first state instance. It can be learned from the first aspect that, in the first aspect, time-shared operations performed by different stateful functions on the first state instance are controlled in a message management manner, and the second stateful function operates the first state instance only after the second message is scheduled to the second stateful function. Similarly, another stateful function associated with the first state instance operates the first state instance only after a corresponding message is scheduled to the stateful function. This prevents another stateful function from occupying a resource for waiting when a stateful function operates a state instance, thereby avoiding a resource waste, and improving resource utilization.

In a possible implementation of the first aspect, the message management apparatus is further configured to: if the second message and the first message are not a same message, after transferring the second message to the second stateful function corresponding to the second message, transfer the first message located at the foremost end of the first message queue to the first stateful function, and run the first stateful function to operate the first state instance in an idle state.

In this possible implementation, if the second message is located in front of the first message in the first message queue, the message management apparatus first schedules the second message to the second stateful function, so that the second stateful function first operates the first state instance. Then, after waiting until the first state instance is idle and the first message is located at the foremost end of the first message queue, the message management apparatus schedules the first message to the first stateful function, and then runs the first stateful function to operate the first state instance.

In a possible implementation of the first aspect, the serverless system further includes a routing (routing) apparatus, a scheduling apparatus (function state scheduler), and a plurality of working nodes. The scheduling apparatus is configured to: receive an address request sent by the routing apparatus, where the address request includes the identifier of the first state instance; deploy the first state instance in a first working node in the plurality of working nodes based on the identifier of the first state instance; and establish a correspondence between the identifier of the first state instance and an address of the message management apparatus, where the message management apparatus corresponds to the first working node.

In this possible implementation, the scheduling apparatus is located in a control node, and the scheduling apparatus may be an instance or a container. The routing (routing) apparatus may be deployed in a routing device such as a switch or a router, or may be deployed in a client. If the scheduling apparatus receives the address request, it indicates that the first state instance has not been deployed in a working node. The address request is used to indicate the scheduling apparatus to deploy the first state instance in the first working node, and establish the correspondence between the identifier of the first state instance and the address of the message management apparatus, where the message management apparatus corresponds to the first working node. The scheduling apparatus may select any one of the plurality of working nodes as the first working node, or may select the first working node according to some selection policies, and then deploy the first state instance in the first working node. After the first state instance is deployed, the message management apparatus corresponding to the first state instance may be determined, to determine the address of the corresponding message management apparatus.

In a possible implementation of the first aspect, the scheduling apparatus is further configured to: ship the first stateful function deployed in a second working node to the first working node, where shipping costs of the first stateful function are less than shipping costs of the first state instance.

In this possible implementation, the shipping costs are a resource loss caused by stateful function shipping or state instance shipping, for example, a transmission resource loss. It may be learned from this possible implementation that, it is determined, by using the shipping costs of the stateful function and the shipping costs of the first state instance, whether to ship data (shipping data) or ship the function (shipping function). In this way, better system performance can be achieved when relatively small shipping overheads are used.

In a possible implementation of the first aspect, the address request further includes the function name of the first stateful function; and the first working node is determined based on overhead information of the plurality of working nodes, a size of the first state instance, and a requirement policy of at least two stateful functions, where the at least two stateful functions are located in a function service group associated with the function name of the first stateful function.

In this possible implementation, the scheduling apparatus may determine, based on the overhead information of the plurality of managed working nodes, the size of the first state instance, and the requirement policy of the at least two stateful functions that have operation permission on the first state instance, the first working node used to deploy the first state instance. The overhead information of the working node indicates a current overhead status of the working node, and may include at least one of a function deployment status of the working nodeof the working node, a usage rate or an idle rate of a central processing unit (central processing unit, CPU), or a usage rate or an idle rate of a memory. The size of the first state instance indicates a data amount of the first state instance. The requirement policy of the at least two stateful functions that have operation permission on the first state instance is a location requirement of the at least two stateful functions and the first state instance during deployment or a requirement for an available resource in a deployed working node. For example, the requirement is whether the state instance and the corresponding stateful functions need to be deployed in a same working node. Alternatively, the requirement is a requirement for an available computing resource or memory resource in the deployed working node. For example, an idle rate of a CPU needs to reach a first threshold, or an idle rate of a memory memory needs to reach a second threshold. Both the first threshold and the second threshold may be set based on requirements. It may be learned from this possible implementation that the first state instance is deployed in the first working node that has a relatively small overhead or has a resource that meets requirements of at least two stateful functions, so that overall performance of the serverless system can be improved.

In a possible implementation of the first aspect, the address request further includes the function name of the first stateful function; and the first working node is a working node with a highest total score in the plurality of working nodes, where a total score of a working node is related to a computing resource of the working node, a storage resource of the working node, or whether at least two stateful functions are deployed in the working node, and the at least two stateful functions are located in a function service group associated with the function name of the first stateful function.

In this possible implementation, an evaluation algorithm may be used to calculate a total score of each working node. The evaluation algorithm may be a resource-related algorithm such as a CPU-related algorithm or a memory-related algorithm, or an affinity-related algorithm such as an algorithm about whether a stateful function and a state instance are located in a same working node. For each working node, a score may be calculated by using each of at least one evaluation algorithm; and then scores respectively corresponding to all evaluation algorithms may be summed to obtain the total score, and then the first working node with the highest score may be selected based on the total score of each working node, to deploy the first state instance. It may be learned from this possible implementation that the first state instance is deployed in the first working node with the highest score, so that overall performance of the serverless system can be improved.

In a possible implementation of the first aspect, the message management apparatus is further configured to: transfer, in parallel relative to the first message queue, a third message located at a foremost end of a second message queue to a third stateful function, and run the third stateful function to operate a second state instance in an idle state, where the second message queue corresponds to the second state instance.

In this possible implementation, one message management apparatus may manage a plurality of message queues. Each message queue corresponds to one state instance. For message queues of different state instances, messages in different queues may be scheduled in a parallel scheduling manner. In this way, operation efficiency of different stateful functions for different state instances can be improved.

In a possible implementation of the first aspect, the message management apparatus is further configured to: after all messages in the first message queue and the second message queue are scheduled, transfer, in parallel, a fourth message located at a foremost end of a third message queue to a fourth stateful function, and run the fourth stateful function to operate the first state instance and the second state instance in an idle state, where the third message queue corresponds to the first state instance and the second state instance, and the fourth stateful function is located behind the first stateful function, the second stateful function, and the third stateful function in terms of a scheduling sequence.

In this possible implementation, the fourth stateful function has operation permission on a combined instance of the first state instance and the second state instance. In addition, the fourth stateful function is located behind the first stateful function, the second stateful function, and the third stateful function in terms of an operation sequence of the first state instance and the second state instance. Therefore, only after all the messages in the first message queue and the second message queue are scheduled, the message in the third message queue is scheduled to operate the combined instance. This possible implementation provides a multi-level stateful function management manner.

In a possible implementation of the first aspect, the serverless system further includes an address management apparatus, and the scheduling apparatus is further configured to send the correspondence between the identifier of the first state instance and the address of the message management apparatus corresponding to the first working node to the address management apparatus. The address management apparatus stores the correspondence.

In this possible implementation, the address management apparatus may also be referred to as a name service apparatus. After determining the address of the message management apparatus, the scheduling apparatus may send the correspondence between the identifier (state ID) of the first state instance and the address (endpoint) of the message management apparatus to the address management apparatus for storage. In this way, when subsequently there is a call request that includes the state ID, the corresponding endpoint can be obtained from the address management apparatus; or the foregoing correspondence can be obtained from the address management apparatus, and then the endpoint corresponding to the state ID is determined based on the correspondence, to send the first message based on the endpoint. In this manner in which the address management apparatus stores the correspondence between the state ID and the endpoint, the message management apparatus corresponding to the call request can be quickly found, to quickly send the message.

In a possible implementation of the first aspect, the routing apparatus is further configured to: receive a call request of a client for the first stateful function, where the call request includes the identifier of the first state instance and the function name of the first stateful function; obtain the address that is of the message management apparatus and that corresponds to the identifier of the first state instance; and send the first message to the message management apparatus indicated by the address of the message management apparatus.

In this possible implementation, the routing apparatus may locally obtain the address of the message management apparatus, may obtain the address of the message management apparatus from the address management apparatus, or may obtain the address of the message management apparatus from the scheduling apparatus.

In a possible implementation of the first aspect, the routing apparatus is configured to: obtain, from the scheduling apparatus, the address that is of the message management apparatus and that corresponds to the identifier of the first state instance; or obtain, from the address management apparatus, the address that is of the message management apparatus and that corresponds to the identifier of the first state instance.

In this possible implementation, if the address management apparatus stores the correspondence between the state ID and the endpoint, the address of the message management apparatus may be obtained from the address management apparatus. If the address management apparatus does not store the correspondence between the state ID and the endpoint, the scheduling apparatus needs to deploy the first state instance and then determine the address of the corresponding message management apparatus.

A second aspect of this application provides a message management method, including: receiving a first message, where the first message is used to indicate to schedule a first stateful function to operate a first state instance; storing the first message in a first message queue corresponding to the first state instance, where the first message queue is used to store a plurality of messages, and each message is used to indicate one stateful function to operate the first state instance; and transferring a second message to a second stateful function corresponding to the second message, and running the second stateful function corresponding to the second message to operate the first state instance in an idle state, where the second message is a message located at a foremost end of the first message queue.

In a possible implementation of the second aspect, the method further includes: if the second message and the first message are not a same message, after transferring the second message to the second stateful function corresponding to the second message, transferring the first message located at the foremost end of the first message queue to the first stateful function, and running the first stateful function to operate the first state instance in an idle state.

In a possible implementation of the second aspect, a third message located at a foremost end of a second message queue is transferred to a third stateful function in parallel relative to the first message queue, and the third stateful function is run to operate a second state instance in an idle state, where the second message queue corresponds to the second state instance.

In a possible implementation of the second aspect, after all messages in the first message queue and the second message queue are scheduled, a fourth message located at a foremost end of a third message queue is transferred to a fourth stateful function in parallel, and the fourth stateful function is run to operate the first state instance and the second state instance in an idle state, where the third message queue corresponds to the first state instance and the second state instance, and the fourth stateful function is located behind the first stateful function, the second stateful function, and the third stateful function in terms of a scheduling sequence.

The message management method provided in the second aspect is applied to the foregoing serverless system. For a feature and a corresponding effect in any one of the second aspect and the possible implementations, refer to the descriptions in the first aspect and the corresponding possible implementations of the first aspect for understanding.

A third aspect of this application provides a message management method. The method is applied to a serverless system, the serverless system includes a message management apparatus, a routing apparatus, a scheduling apparatus, and a plurality of working nodes, and the method includes: receiving an address request sent by the routing apparatus, where the address request includes an identifier of a first state instance; deploying the first state instance in a first working node in the plurality of working nodes based on the identifier of the first state instance; and establishing a correspondence between the identifier of the first state instance and an address of the message management apparatus, where the message management apparatus corresponds to the first working node.

In a possible implementation of the third aspect, the method further includes: shipping a first stateful function deployed in a second working node to the first working node, where shipping costs of the first stateful function are less than shipping costs of the first state instance.

In a possible implementation of the third aspect, the address request further includes a function name of the first stateful function; and the first working node is determined based on overhead information of the plurality of working nodes, a size of the first state instance, and a requirement policy of at least two stateful functions, where the at least two stateful functions are located in a function service group associated with the function name of the first stateful function.

In a possible implementation of the third aspect, the address request further includes a function name of the first stateful function; and the first working node is a working node with a highest total score in the plurality of working nodes, where a total score of a working node is related to a computing resource of the working node, a storage resource of the working node, or whether at least two stateful functions are deployed in the working node, and the at least two stateful functions are located in a function service group associated with the function name of the first stateful function.

In a possible implementation of the third aspect, the serverless system further includes an address management apparatus, and the method further includes: sending the correspondence between the identifier of the first state instance and the address of the message management apparatus corresponding to the first working node to the address management apparatus.

For features and corresponding effects in the third aspect, refer to the corresponding descriptions in the first aspect and the possible implementations of the first aspect for understanding. Details are not described herein again.

A fourth aspect of this application provides a message management apparatus. The message management apparatus has a function of implementing the method in any one of the second aspect or the possible implementations of the second aspect. The function may be implemented by hardware, or may be implemented by hardware executing corresponding software. The hardware or software includes one or more modules corresponding to the foregoing function, for example, a receiving unit, a first processing unit, and a second processing unit.

A fifth aspect of this application provides a scheduling apparatus. The message management apparatus has a function of implementing the method in any one of the third aspect or the possible implementations of the third aspect. The function may be implemented by hardware, or may be implemented by hardware executing corresponding software. The hardware or software includes one or more modules corresponding to the foregoing function, for example, a receiving unit, a first processing unit, and a second processing unit.

A sixth aspect of this application provides a computer device. The computer device includes at least one processor, a memory, an input/output (input/output, I/O) interface, and computer-executable instructions that are stored in the memory and that can run on the processor. When the computer-executable instructions are executed by the processor, the processor performs the method according to any one of the second aspect or the possible implementations of the second aspect.

A seventh aspect of this application provides a computer device. The computer device includes at least one processor, a memory, an input/output (input/output, I/O) interface, and computer-executable instructions that are stored in the memory and that can run on the processor. When the computer-executable instructions are executed by the processor, the processor performs the method according to any one of the third aspect or the possible implementations of the third aspect.

An eighth aspect of this application provides a computer-readable storage medium for storing one or more computer-executable instructions. When the computer-executable instructions are executed by a processor, the processor performs the method according to any one of the second aspect or the possible implementations of the second aspect.

A ninth aspect of this application provides a computer-readable storage medium for storing one or more computer-executable instructions. When the computer-executable instructions are executed by a processor, the processor performs the method according to any one of the third aspect or the possible implementations of the third aspect.

A tenth aspect of this application provides a computer program product for storing one or more computer-executable instructions. When the computer-executable instructions are executed by a processor, the processor performs the method according to any one of the second aspect or the possible implementations of the second aspect.

An eleventh aspect of this application provides a computer program product for storing one or more computer-executable instructions. When the computer-executable instructions are executed by a processor, the processor performs the method according to any one of the third aspect or the possible implementations of the third aspect.

A twelfth aspect of this application provides a chip system. The chip system includes at least one processor, and the at least one processor is configured to support an inter-process communications apparatus in implementing the function in any one of the second aspect or the possible implementations of the second aspect. In a possible design, the chip system may further include a memory. The memory is configured to store necessary program instructions and data of the message management apparatus. The chip system may include a chip, or may include a chip and another discrete component.

A thirteenth aspect of this application provides a chip system. The chip system includes at least one processor, and the at least one processor is configured to support an inter-process communications apparatus in implementing the function in any one of the third aspect or the possible implementations of the third aspect. In a possible design, the chip system may further include a memory. The memory is configured to store necessary program instructions and data of the scheduling apparatus. The chip system may include a chip, or may include a chip and another discrete component.

In the embodiments of this application, time-shared operations performed by different stateful functions on the first state instance are controlled in a message management manner. Only after the first message is scheduled to the first stateful function, the first stateful function prepares a resource for operating the first state instance, and then operates the first state instance. This prevents another stateful function from occupying a resource for waiting when a stateful function operates a state instance, thereby avoiding a resource waste, and improving resource utilization.

**BRIEF DESCRIPTION OF DRAWINGS**

FIG. 1 is a schematic diagram of a structure of a serverless system according to an embodiment of this application;
FIG. 2A is a schematic diagram of another structure of a serverless system according to an embodiment of this application;
FIG. 2B is a schematic diagram of another structure of a serverless system according to an embodiment of this application;
FIG. 3 is a schematic diagram of an embodiment of a message management method according to an embodiment of this application;
FIG. 4A is a schematic diagram of a scenario instance according to an embodiment of this application;
FIG. 4B is a schematic diagram of another scenario instance according to an embodiment of this application;
FIG. 5A is a schematic diagram of another scenario instance according to an embodiment of this application;
FIG. 5B is a schematic diagram of another scenario instance according to an embodiment of this application;
FIG. 5C is a schematic diagram of another scenario instance according to an embodiment of this application;
FIG. 6 is a schematic diagram of an instance in a video scenario according to an embodiment of this application;
FIG. 7 is a schematic diagram of an embodiment of a message management method in a video scenario according to an embodiment of this application;
FIG. 8A is an effect comparison diagram according to an embodiment of this application;
FIG. 8B is another effect comparison diagram according to an embodiment of this application;
FIG. 9 is a schematic diagram of an embodiment of a message management apparatus according to an embodiment of this application;
FIG. 10 is a schematic diagram of an embodiment of a scheduling apparatus according to an embodiment of this application;
FIG. 11 is a schematic diagram of a structure of a computer device according to an embodiment of this application; and
FIG. 12 is a schematic diagram of another structure of a computer device according to an embodiment of this application.

**DESCRIPTION OF EMBODIMENTS**

The following describes the embodiments of this application with reference to the accompanying drawings. Clearly, the described embodiments are merely some but not all embodiments of this application. It may be learned by a person of ordinary skill in the art that, with development of technologies and emergence of a new scenario, the technical solutions provided in the embodiments of this application are also applicable to a similar technical problem.

In the specification, claims, and accompanying drawings of this application, the terms "first", "second", and so on are intended to distinguish between similar objects, but do not necessarily indicate a specific order or sequence. It should be understood that the data termed in such a way are interchangeable in appropriate circumstances, so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other steps or units not expressly listed or inherent to such a process, method, product, or device.

Embodiments of this application provide a serverless system, to control, in a message management manner, time-shared operations performed by different stateful functions on a state instance. Only after obtaining a message for operating a state instance, a stateful function needs to prepare a resource, and then operate the state instance, thereby avoiding a resource waste. The embodiments of this application further provide a corresponding message management method and apparatus. Details are separately described in the following.

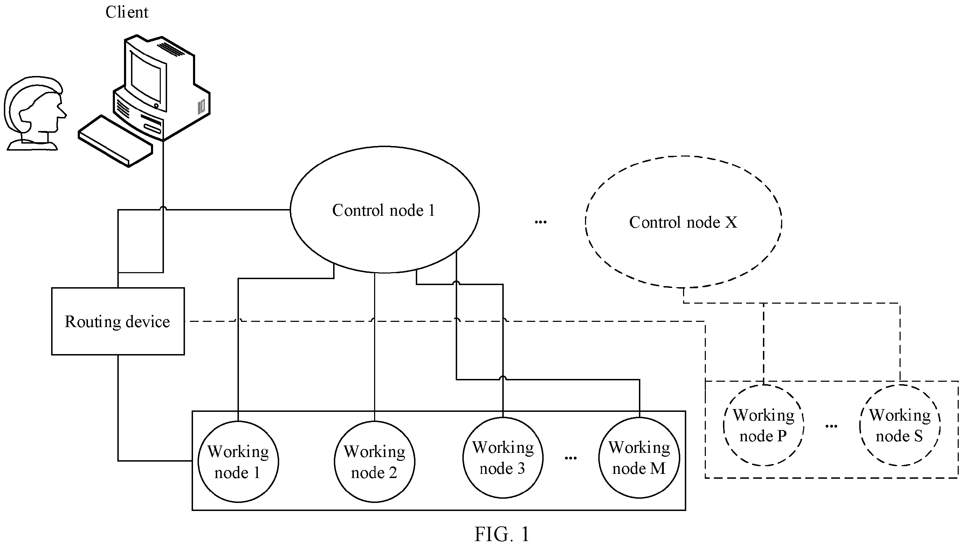

FIG. 1 is a schematic diagram of an embodiment of a serverless system in an embodiment of this application.

As shown in FIG. 1, the serverless system includes a client, a routing device, control nodes, and working nodes. There may be one or more control nodes, for example, a control node 1 to a control node X in FIG. 1, where X is an integer greater than 1. Usually, there are a plurality of working nodes, for example, a working node 1, a working node 2, a working node 3, ..., and a working node M, and a working node P to a working node S, where M, P, and S are all integers greater than 3, and S>P>M. The control node 1 can manage the working node 1 to the working node M. The control node M can manage the working node P to the working node S. Certainly, a management manner is not limited thereto. Alternatively, the control node 1 to the control node X may manage the working node 1 to the working node M and the working node P to the working node S together. Alternatively, the control node 1 to the control node M may manage the working node 1 to the working node M and the working node P to the working node S in turn. In this application, "a plurality of" includes "two", and "a plurality of" may also be described as "at least two".

The client may be a computer device such as a mobile phone (mobile phone), a pad (pad), a notebook computer, or a personal computer (personal computer, PC). Alternatively, the client may be a service process on the cloud. The routing device may be a device such as a switch or a router. Both the control node and the working node may be independent physical machines, or may be virtual machines (virtual machine, VM) virtualized from cloud resources.

A user may publish a function to the control node by using the client, and the control node records information about the function. The information about the function may include a function service group, a function name, function code, and the like. Certainly, the information about the function may alternatively include other parameters, and is not limited to the function service group, the function name, and the function code that are listed herein. The function service group includes a name of a state instance bound to the function and a name of another function bound to the state instance.

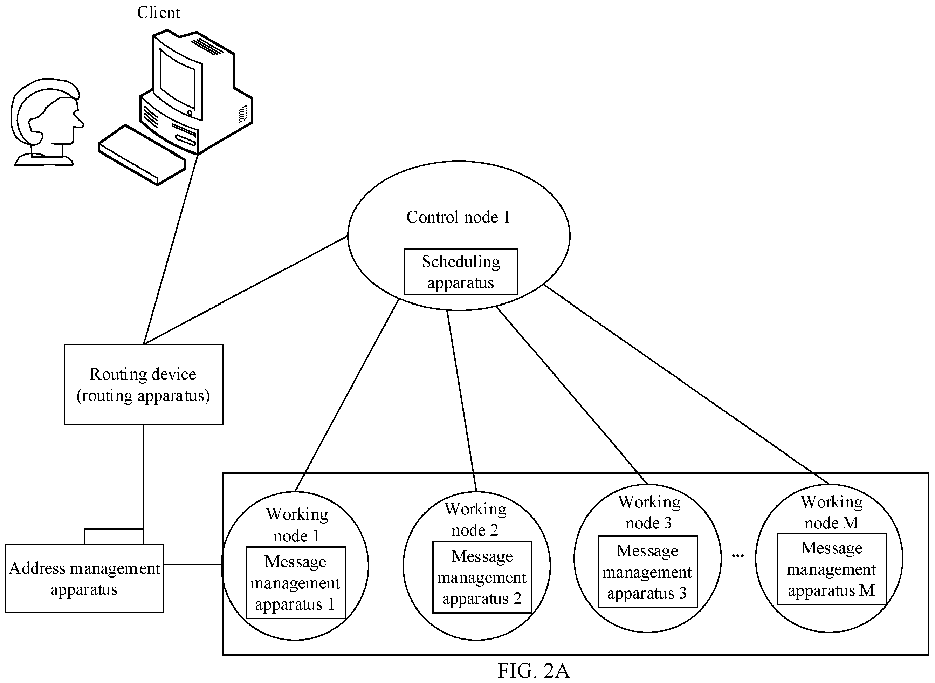

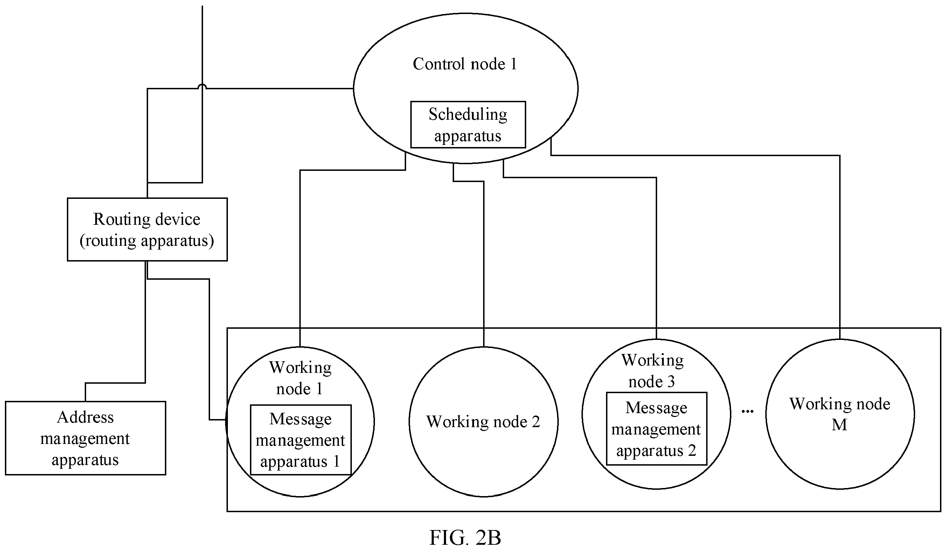

In this embodiment of this application, as shown in FIG. 2A and FIG. 2B, the control node may include a scheduling apparatus (function state scheduler), the working node may include a message management apparatus (state message manager), and the routing device may include a routing (routing) apparatus. The scheduling apparatus, the message management apparatus, and the routing apparatus each may be an instance (instance) or a container (container), and may respectively implement corresponding functions in the control node, the working node, and the routing device by using software. In addition, the serverless system may further include an address management apparatus. The address management apparatus may also be referred to as a name service apparatus. The address management apparatus may be an independent physical machine, or may be a virtual machine virtualized from a cloud resource. The address management apparatus is configured to store an address of the message management apparatus.

In FIG. 2A, one message management apparatus is configured in each working node. In FIG. 2B, message management apparatuses are configured in only some working nodes. Actually, the message management apparatus in this application is not limited to being configured in the working node, and the message management apparatus may be alternatively configured in the control node. In addition, the routing apparatus may be configured in the client instead of the routing device.

In addition, it should be noted that the schematic diagrams of the serverless systems shown in FIG. 2A and FIG. 2B are merely shown by using the control node 1 and working nodes under the control node as an example. Actually, the serverless system may further include the control node M and the working node P to the working node S that are shown in FIG. 1. For all relationships between the control node M and the working node P to the working node S and the foregoing message management apparatus, scheduling apparatus, routing apparatus, and address management apparatus, refer to the corresponding relationships in FIG. 2A and FIG. 2B for understanding.

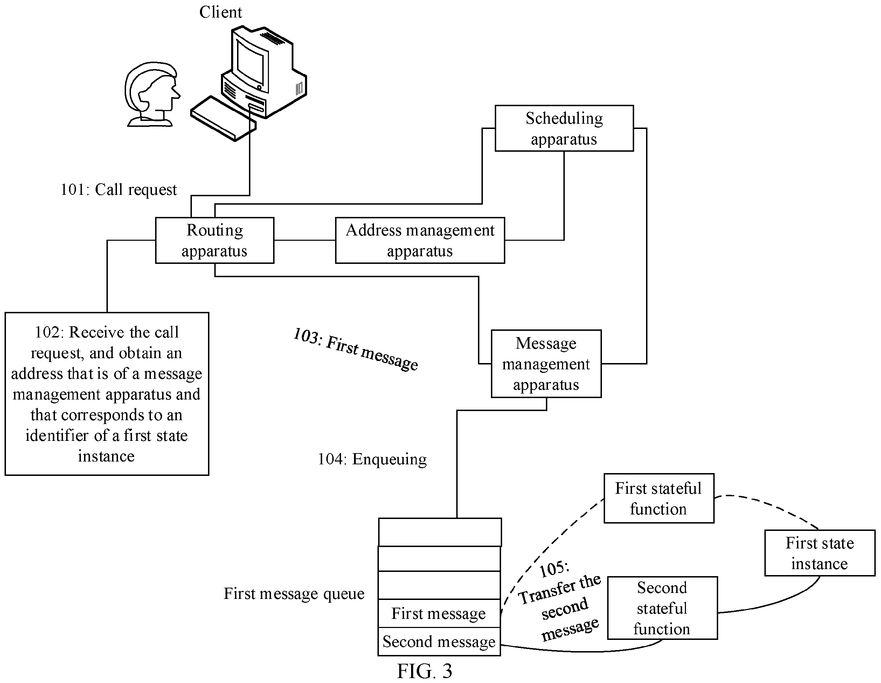

The serverless systems shown in FIG. 2A and FIG. 2B each may manage a stateful function and a state instance, and implement time-shared operations performed by a plurality of stateful functions on a same state instance through message management. The following describes, with reference to FIG. 3, the message management method provided in the embodiments of this application.

As shown in FIG. 3, an embodiment of a message management method provided in an embodiment of this application includes the following steps.

101: A client initiates a call request for a first stateful function.

The call request includes an identifier (state ID) of a first state instance and a function name of the first stateful function.

The stateful function indicates that state data in a running process of the function can be retained, and the state data can be operated next time the function runs. The state data is transient data or context data in the running process of the function.

The state data is included in a state instance. State data in a state instance can be modified, but an identifier of the state instance, namely, a state ID of the state instance does not change.

102: A routing apparatus receives the call request, and obtains an address that is of a message management apparatus and that corresponds to the identifier of the first state instance.

In step 102, the address (endpoint) that is of the message management apparatus and that corresponds to the information (state ID) of the first state instance may be obtained in the following three manners.

Manner 1: The address that is of the message management apparatus and that corresponds to the identifier of the first state instance is locally obtained from the routing apparatus.

The routing apparatus may determine, through searching based on the identifier of the first state instance, whether a correspondence between the identifier of the first state instance and the corresponding address of the message management apparatus is locally stored; and if the correspondence is locally stored, may find the endpoint corresponding to the state ID.

Manner 2: The address that is of the message management apparatus and that corresponds to the identifier of the first state instance is obtained from an address management apparatus.

The address management apparatus is configured to store a correspondence between the state ID and the endpoint.

The routing apparatus may send the state ID to the address management apparatus. The address management apparatus determines, based on the state ID and the stored correspondence, the endpoint corresponding to the state ID. The address management apparatus sends the endpoint to the routing apparatus.

Alternatively, the routing apparatus obtains the correspondence from the address management apparatus, and then determines the endpoint corresponding to the state ID.

Manner 3: The address that is of the message management apparatus and that corresponds to the identifier of the first state instance is obtained from a scheduling apparatus.

If the endpoint corresponding to the state ID cannot be obtained in the first manner or the second manner, it indicates that the correspondence between the state ID and the endpoint does not exist. In this case, the routing apparatus may send an address request to the scheduling apparatus. The address request is used to indicate the scheduling apparatus to deploy the first state instance in a first working node, and establish the correspondence between the identifier of the first state instance and the address of the message management apparatus, where the message management apparatus corresponds to the first working node. The address request includes the identifier (state ID) of the first state instance, and may also include the function name of the first stateful function.

If the address request does not include the function name of the first stateful function, any one of the plurality of working nodes may be selected as the first working node.

If the address request includes the function name of the first stateful function, the scheduling apparatus determines, based on the function name of the first stateful function, a function service group to which the function belongs and information related to the function in the function service group, such as a state instance bound to the function and a function name of another function bound to the state instance.

The scheduling apparatus may schedule the first state instance, to schedule the first state instance to the first working node, and then record the correspondence between the address of the message management apparatus corresponding to the first working node and the identifier of the first state instance. That is, the scheduling apparatus determines the address that is of the message management apparatus and that corresponds to the identifier of the first state instance, where the address is used to indicate a receiver of a first message, that is, the message management apparatus that receives the first message.

The scheduling apparatus sends the message management apparatus of the first state instance and the address of the message management apparatus to the address management apparatus, that is, the scheduling apparatus sends the correspondence between the state ID and the endpoint to the address management apparatus.

The scheduling apparatus may also return the address (endpoint) of the message management apparatus to the routing apparatus.

103: The routing apparatus sends the first message to the message management apparatus indicated by the address of the message management apparatus.

The first message includes the identifier of the first state instance and the function name of the first stateful function, and the first message is used to indicate to schedule the first stateful function to operate the first state instance.

104: The message management apparatus receives the first message, and stores the first message in a first message queue corresponding to the first state instance.

The first message queue is further used to store a plurality of messages, and each of the plurality of messages is used to indicate one stateful function to operate the first state instance.

That the first message queue is used to store a plurality of messages indicates that the first message queue can store a plurality of messages instead of indicating that the first message queue currently stores a plurality of messages. A message in the first message queue may be dequeued. Therefore, within one moment, the first message queue may have one message, may have a plurality of messages, or may have no message.

Messages entered the first message queue are arranged in sequence, and are scheduled from the first message queue according to a first-in-first-out principle.

105: Transfer a second message to a second stateful function corresponding to the second message, and run the second stateful function corresponding to the second message to operate the first state instance in an idle state.

The second message is a message located at a foremost end of the first message queue. That the second message is located at the foremost end of the first message queue indicates that the second message enters the first message queue earlier than another message currently included in the first message queue.

The second message may enter the first message queue earlier than the first message. If there is no message in the first message queue when the first message enters the first message queue, the second message is the first message, and the second stateful function corresponding to the second message is the first stateful function.

That the first state instance is in an idle state indicates that the first state instance is not operated by another stateful function associated with the first state instance.

The second stateful function operates the first state instance only after the second message is transferred to the second stateful function.

If the second message and the first message are not a same message, after the second message is transferred to the second stateful function corresponding to the second message, the first message located at the foremost end of the first message queue is transferred to the first stateful function, and the first stateful function is run to operate the first state instance in an idle state.

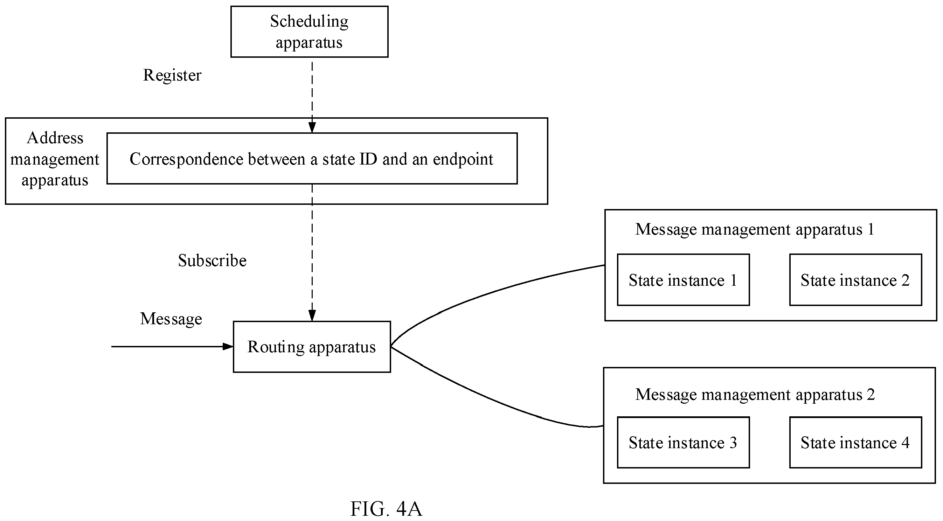

In the foregoing solution, a process of obtaining the correspondence between the state ID and the endpoint by using the address management apparatus is shown in FIG. 4A: After the scheduling apparatus schedules the state instance and the stateful function, the scheduling apparatus stores, in the address management apparatus in a registration manner, the state ID of the state instance and the address endpoint of the message management apparatus in which the state instance is deployed. In the correspondence between the state ID and the endpoint, corresponding value: endpoint can be found by using key: state ID. The routing apparatus subscribes to related information of the address management apparatus, obtains the correspondence between the stateid and the endpoint, and determines the endpoint by using the stateid, that is, a message receiver forwards the message to the message management apparatus that includes the state instance. As shown in FIG. 4A, messages related to a state instance 1 and a state instance 2 are forwarded to a message management apparatus 1, and messages related to a state instance 3 and a state instance 4 are forwarded to a message management apparatus 2.

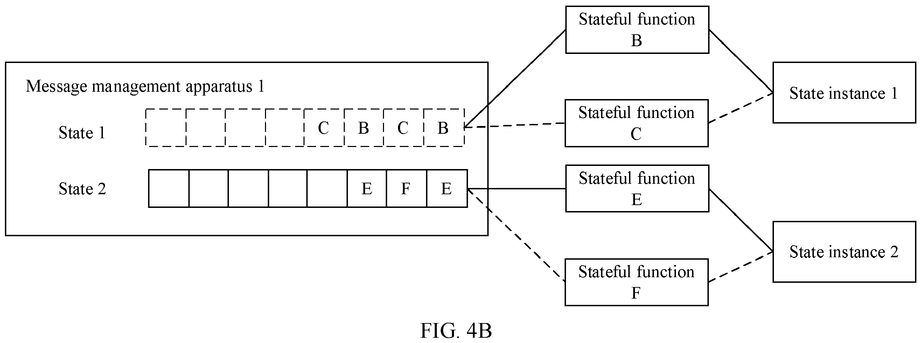

In each message management apparatus, one message queue is maintained for each state instance, and each message queue may be identified by a state ID of a corresponding state instance. As shown in FIG. 4B, in the message management apparatus 1, a message queue exists for the state instance 1 and is identified by using a state 1, and a message queue exists for the state instance 2 and is identified by using a state 2. A stateful function B and a stateful function C operate the state instance 1 in a time-shared operation manner based on an arrangement sequence of messages in the message queue identified by the state 1. A stateful function E and a stateful function F operate the state instance 2 in a time-shared operation manner based on an arrangement sequence of messages in the message queue identified by the state 2.

In the solutions provided in this embodiment of this application, time-shared operations performed by different stateful functions on the first state instance are controlled in a message management manner, and the second stateful function operates the first state instance only after the second message is scheduled to the second stateful function. Similarly, another stateful function associated with the first state instance operates the first state instance only after a corresponding message is scheduled to the stateful function. This prevents another stateful function from occupying a resource for waiting when a stateful function operates a state instance, thereby avoiding a resource waste, and improving resource utilization.

In this embodiment of this application, if the scheduling apparatus receives the address request, it indicates that the first state instance has not been deployed in a working node. The address request is used to indicate the scheduling apparatus to allocate a message management apparatus to the first state instance, and establish a correspondence between the identifier of the first state instance and an address of the allocated message management apparatus.

The scheduling apparatus may determine, based on overhead information of a plurality of managed working nodes, a size of the first state instance, and a requirement policy of at least two stateful functions that have operation permission on the first state instance, the first working node used to deploy the first state instance.

The overhead information of the working node indicates a current overhead status of the working node, and may include at least one of a function deployment status of the working nodeof the working node, a usage rate or an idle rate of a central processing unit (central processing unit, CPU), or a usage rate or an idle rate of a memory. The size of the first state instance indicates a data amount of the first state instance. For the data amount, when publishing the first stateful function or the second stateful function, a user may define binding relationships between the two stateful functions and the first state instance and define the size of the first state instance. In addition, the size of the first state instance may be alternatively determined by collecting and evaluating a state instance of a same type. The requirement policy of the at least two stateful functions that have operation permission on the first state instance may include: whether the state instance and the corresponding stateful functions need to be deployed in a same working node, an idle rate of a CPU needs to reach a first threshold, an idle rate of a memory needs to reach a second threshold, or the like. Both the first threshold and the second threshold may be set based on requirements.

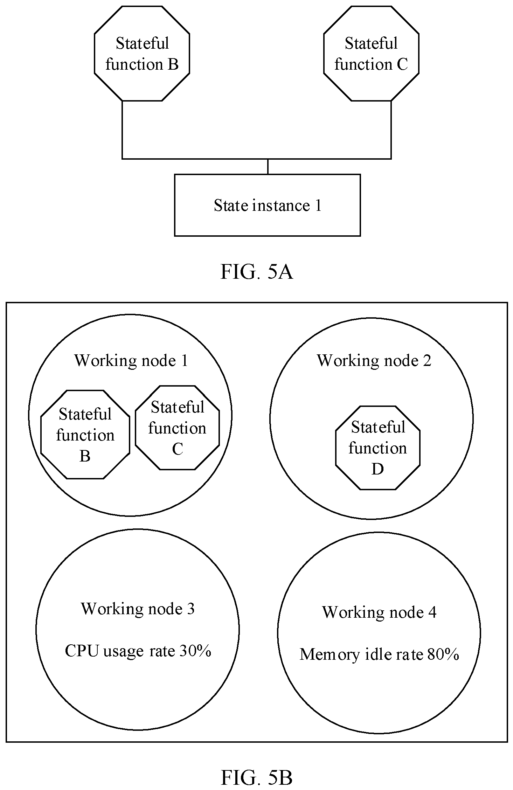

For this process, refer to schematic diagrams of scenarios shown in FIG. 5A and FIG. 5B for understanding. As shown in FIG. 5A, both a stateful function B and a stateful function C can operate a state instance 1. As shown in FIG. 5B, a control node in which the scheduling apparatus is located manages four working nodes: a working node 1, a working node 2, a working node 3, and a working node 4. Both the stateful function B and the stateful function C are deployed in a working node 1. A stateful function D is deployed in a working node 2. A usage rate of a CPU of a working node 3 is only 30%, and 70% of the CPU are in an idle state. An idle rate of a memory of a working node 4 is 80%.

If remaining memory of the working node 1 can store the state instance 1, it is preferable that the state instance 1 is deployed in the working node 1. In this way, the stateful function B, the stateful function C, and the state instance 1 are all located in the same working node, so that the state instance 1 does not need to be operated across working nodes, thereby reducing communication overheads.

If remaining memory of the working node 1 is not enough to store the state instance 1, a working node needs to be selected from the working node 2, the working node 3, and the working node 4 to deploy the state instance 1. If the requirement policy indicates a relatively high CPU requirement, the working node 3 may be selected to deploy the state instance 1. If the requirement policy indicates a relatively high memory requirement, the working node 4 may be selected to deploy the state instance 1.

In addition, an embodiment of this application further provides another working node selection solution. In the selection solution, all working nodes may be scored first, and a working node with a highest score is selected from the working nodes to deploy the state instance 1.

In a process of scoring all the working nodes, calculation may be performed by using the following relational formula:

$$f(x) = \sum_{k=0}^{n} t(x)\frac{\alpha}{n}$$

In the foregoing relational formula, $f(x)$ indicates a total score obtained after a working node is evaluated by using various evaluation algorithms, n indicates a quantity of evaluation algorithms, $\alpha$ indicates a proportion of a current evaluation algorithm, and t(x) indicates the current evaluation algorithm.

The evaluation algorithm may be a resource-related algorithm (such as a CPU-related algorithm or a memory-related algorithm), or an affinity-related algorithm (such as an algorithm about whether a stateful function and a state instance are located in a same working node).

A total score of each working node is determined by using the foregoing relational formula, and then a working node with a largest total score is selected from m working nodes by using the following relational formula:

$$node = max \sum_{k=0}^{m} f(C_m)$$

In the foregoing relational formula, *node* indicates a selected node, for example, the foregoing first working node, $f(C_m)$ indicates respective total scores of the m working nodes, and max indicates that the working node with the largest score is selected from the m working nodes to deploy the first state instance.

This process of selecting the first working node by calculating total scores may also be described as follows: The first working node is a working node with a highest total score in a plurality of working nodes, where a total score of a working node is related to a computing resource of the working node, a storage resource of the working node, or whether at least two stateful functions are deployed in the working node.

After the first state instance is deployed, according to the foregoing process of selecting the first working node, if the first state instance and the first stateful function are not in a same working node, shipping costs of the first stateful function and shipping costs of the first state instance may be determined. If the shipping costs of the first stateful function are less than the shipping costs of the first state instance, the first stateful function is shipped from a working node in which the first stateful function is currently located to the first working node.

If the second stateful function and the first state instance are also not in a same working node, shipping costs of the second stateful function and shipping costs of the first state instance may also be determined. If the shipping costs of the second stateful function are less than the shipping costs of the first state instance, the second stateful function is shipped from a working node in which the second stateful function is currently located to the first working node.

The shipping costs are a resource loss caused by stateful function shipping or state instance shipping, for example, a transmission resource loss, a migration overload (for example, migration duration) caused by state instance shipping, or a deploy overload (for example, migration duration) caused by stateful function shipping. In addition, a resource status of each working node in a cluster may also be considered during state instance or stateful function shipping.

Factors that need to be considered for the foregoing shipping may be indicated by using a relational formula: $y = f(x1, x2, x3)$.

x1 indicates a data migration overhead (data migration overhead) of a state instance, for example, migration duration.

x2 indicates a functions deploy overhead (functions_deploy_overhead) of a stateful function, for example, migration duration.

x3 indicates a resource (resource) of a current cluster.

In this embodiment of this application, it is determined, by using shipping costs of a stateful function and shipping costs of a corresponding state instance, whether to ship data (shipping data) or ship the function (shipping function). In this way, better system performance can be achieved when relatively small shipping overheads are used.

Y = f(data_migration_overhead data migration overhead (loss, for example, migration duration), functions_deploy_overhead functions deploy overhead (loss, for example, migration duration), resource resource of the current cluster).

The foregoing describes a process of managing the first message queue. If the message management apparatus further maintains a message queue of another state instance, the message management apparatus is further configured to: transfer, in parallel relative to the first message queue, a third message located at a foremost end of a second message queue to a third stateful function, and run the third stateful function to operate a second state instance in an idle state, where the second message queue corresponds to the second state instance.

In this possible embodiment, one message management apparatus may manage a plurality of message queues. Each message queue corresponds to one state instance. For message queues of different state instances, messages in different queues may be scheduled in a parallel scheduling manner. In this way, operation efficiency of different stateful functions for different state instances can be improved.

Optionally, the message management apparatus is further configured to: after all messages in the first message queue and the second message queue are scheduled, transfer, in parallel, a fourth message located at a foremost end of a third message queue to a fourth stateful function, and run the fourth stateful function to operate the first state instance and the second state instance in an idle state, where the third message queue corresponds to the first state instance and the second state instance, and the fourth stateful function is located behind the first stateful function, the second stateful function, and the third stateful function in terms of a scheduling sequence.

In this possible embodiment, the fourth stateful function has operation permission on a combined instance of the first state instance and the second state instance. In addition, the fourth stateful function is located behind the first stateful function, the second stateful function, and the third stateful function in terms of an operation sequence of the first state instance and the second state instance. Therefore, only after all the messages in the first message queue and the second message queue are scheduled, the message in the third message queue is scheduled to operate the combined instance. This possible implementation provides a multi-level stateful function management manner.

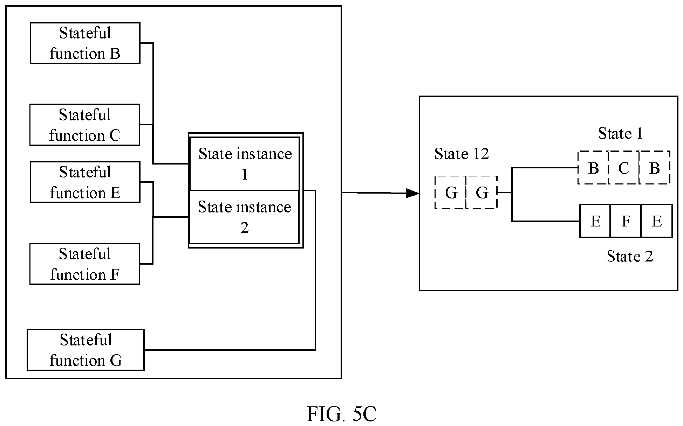

For this process, refer to FIG. 5C for understanding. As shown in FIG. 5C, both a stateful function B and a stateful function C can operate a state instance 1, both a stateful function E and a stateful function F can operate a state instance 2, and a stateful function G can operate a combined instance of the state instance 1 and the state instance 2. In terms of an operation sequence, the stateful function G is located behind the four other functions. A message queue of the state instance 1 is identified by a state 1, and a message queue of the state instance 2 is identified by a state 2. A message queue of the combined instance of the state instance 1 and the state instance 2 is identified by a state 12. During message scheduling, the message management apparatus may perform scheduling for the message queue of the state 1 and the message queue of the state 2 in a parallel scheduling manner. For a scheduling rule of messages in each of the message queue of the state 1 and the message queue of the state 2, refer to the scheduling process of the first message queue in the foregoing embodiment for understanding. A message G in the message queue of the state 12 is scheduled only after all messages in the message queue of the state 1 and the message queue of the state 2 are scheduled.

The serverless system and the message management method that are provided in the embodiments of this application may be applied to a plurality of application scenarios. The following describes the solutions of this application by combining the foregoing serverless system and message management method in a video scenario.

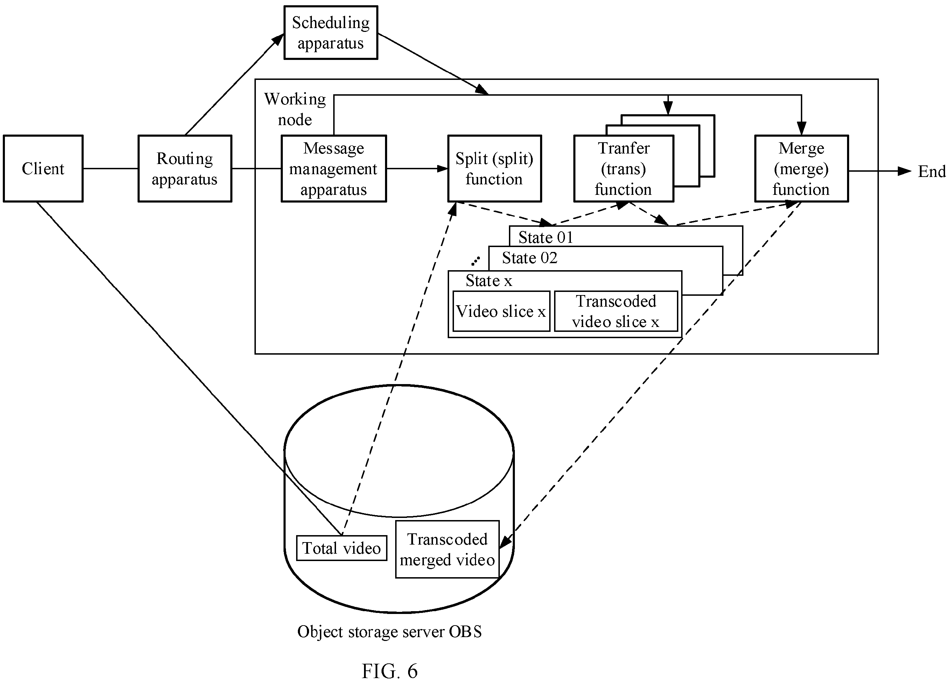

As shown in FIG. 6, in this video scenario, a total video is stored in an object storage server (object storage service, OBS). The total video may be a live video, or may be a movie, an episode of a TV series, or a data set of another program. When a client requests a total video, because a format of a video stored in the OBS cannot be directly used by the client, after the client requests the total video, the total video needs to be processed based on a display form (such as ultra-fast, high definition, and ultra high definition) of the client. In a video processing process, a bitstream of the total video needs to be split (split), then each slice is transferred (transfer, trans), and finally all slices are merged (merge).

The foregoing split process needs to be performed by running a split function (split function), the foregoing transfer process needs to be performed by running a transfer function (trans function), each slice corresponds to one transfer function, and the foregoing merge process needs to be performed by running a merge function (merge function).

In this scenario, each video slice and a corresponding transcoded video slice may be understood as one state instance. One transfer function corresponds to one state instance, but the split function, the merge function, and the transfer function all can operate the state instance. As shown in FIG. 6, each video slice of the total video is deployed in a working node, and is located in the same working node as the split function, the transfer function, and the merge function. One transfer process is performed for each video slice to obtain a transcoded video slice. For example, the total video may be split into x video slices: a video slice 1, a video slice 2, ..., and a video slice x, x transcoded video slices are obtained after each transfer function operates a corresponding video slice once, and the merge function may merge the x transcoded video slices and then store a transcoded merged video in the OBS, where x is an integer greater than 2.

Each video slice is one state instance. Video content in the state instance can be operated, for example, transcoded by the transfer function to obtain a transcoded video slice. However, identifiers of state instances remain unchanged, and the state instances can be identified by a state 01, a state 02, ..., and a state x before and after transferring.

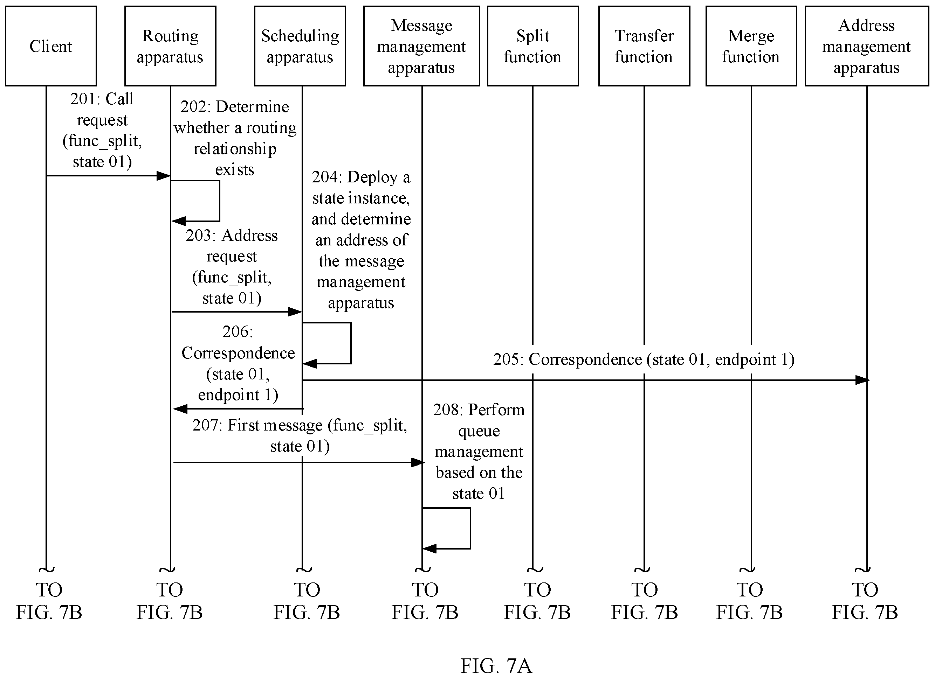

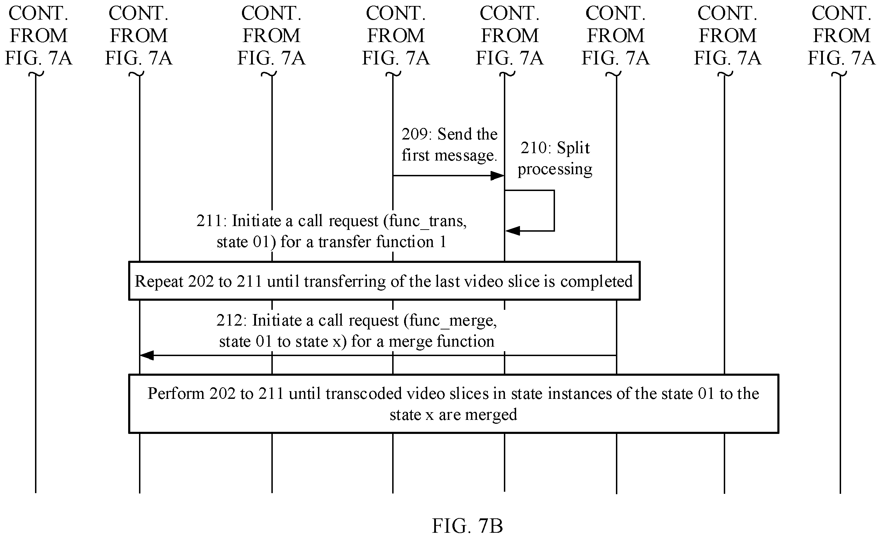

For a process of the message management method in the foregoing video scenario, refer to FIG. 7 for understanding. As shown in FIG. 7, the process of the message management method in the video scenario may include the following steps.

201: A client sends a call request to a routing apparatus.

The call request includes a function name (func_split) and an identifier (state 01) of a state instance.

202: The routing apparatus determines whether a routing relationship in the call request exists.

If the routing relationship in the call request exists, the routing apparatus skips step 203 to step 206 to directly perform step 207; or if the routing relationship in the call request does not exist, the routing apparatus performs step 203.

203: The routing apparatus sends an address request to a scheduling apparatus.

The address request includes func_split and the state 01.

204: The scheduling apparatus deploys the state instance, and determines an address of a message management apparatus corresponding to the state instance.

For this process, refer to the third solution in step 102 in the foregoing embodiment for understanding: obtaining, from the scheduling apparatus, the endpoint corresponding to the state ID. In addition, for a process of deploying the state instance and determining, after deploying the state instance, whether to ship a split stateful function, refer to the corresponding examples in FIG. 5A and FIG. 5B in the foregoing embodiment for understanding.

205: The scheduling apparatus sends a correspondence between the state 01 and an endpoint 1 to an address management apparatus, and correspondingly, the address management apparatus stores the correspondence between the state 01 and the endpoint 1.

206: The scheduling apparatus sends the correspondence between the state 01 and the endpoint 1 to the routing apparatus.

207: The routing apparatus sends a first message to the corresponding message management apparatus based on the endpoint 1.

The first message includes func_split and the state 01.

208: Place the first message in a message queue corresponding to the state 01 in a queue management manner.

209: The message management apparatus schedules the first message from the message queue to a split function.

If there is no split function locally (in a working node in which the message management apparatus is located), a split function may be locally created.

It should be noted that, in this embodiment of this application, it is not mandatory that the split function needs to be locally located. If there is no split function locally, the message management apparatus notifies the scheduling apparatus to randomly create a split function, or uses an existing split function, to implement the procedure of this application.

For content of message queue management in steps 208 and 209, refer to steps 104 and 105 in the foregoing embodiment corresponding to FIG. 3 and the corresponding descriptions of FIG. 4A and FIG. 4B. This is not described herein again.

210: Run the split function to split a total video.

211: After running the split function and completing splitting, initiate a call request for a transfer function instance 1.

The call request for the transfer function instance 1 includes func_trans and the state 01.

Next, the foregoing steps 202 to 210 may be performed based on func_trans and the state 01. A difference lies in that a transfer function instance changes.

Because each transfer function instance corresponds to one state instance, for a correspondence between the foregoing transfer function instance and the state instance, refer to Table 1 for understanding.

**Table 1: Transfer function instance and an identifier of a state instance**

| Transfer function instance | Identifier of the state instance |
|---|---|
| func_trans 1 | state 01 |
| func_trans 2 | state 02 |
| ... | ... |
| func_trans x | state x |

Because the transfer function instance 1 corresponds to the state 01, only a function instance changes in step 211. After the transfer function instance 1 completes a corresponding transfer operation, a transfer function instance 2 is called, to repeatedly perform the processes of the foregoing steps 202 to 210 by using an identifier state 02 of a state instance. This is repeated until a transfer function instance x completes an operation on a state instance x. Then, step 212 is performed.

212: Run the transfer function instance x to initiate a call request for a merge function.

The call request for the merge function includes func_merge and the state 01 to the state x.

Then, the processes of the foregoing steps 202 to 210 are performed based on func_merge and the state 01 to the state x, to complete merging of transcoded video slices in the state instance 1 to the state instance x.

In the video scenario of this application, time-shared operations performed by different stateful functions on the first state instance are controlled in a message management manner. Only after the first message is scheduled to the first stateful function, the first stateful function prepares a resource for operating the first state instance, and then operates the first state instance. This prevents another stateful function from occupying a resource for waiting when a stateful function operates a state instance, thereby avoiding a resource waste, and improving resource utilization. In addition, it is determined, based on shipping costs of a function and shipping costs of a state instance, whether to ship the function or ship the state instance. In this way, better system performance is achieved when relatively small shipping overheads are used.

An embodiment of this application further provides a comparison diagram of computing performance of machine learning performed by using the solutions of this application and a PyWren model in the industry.

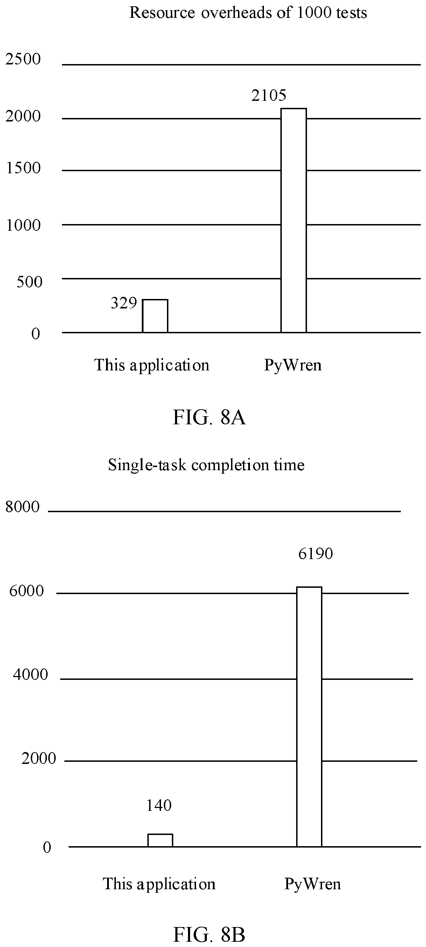

As shown in FIG. 8A, the comparison diagram shows test overheads (unit: US dollar) of this application and the PyWren model in the industry. It can be learned from FIG. 8A that, resource overheads for completing 1000 tests in this application are 329, and resource overheads for completing 1000 tests in the PyWren model in the industry are 2105. It can be learned that the resource overheads of the 1000 tests in this application are reduced by six times compared with the resource overheads in the PyWren model in the industry.

As shown in FIG. 8B, the comparison diagram shows single-task completion time (unit: second s) of this application and the PyWren model in the industry. It can be learned from FIG. 8B that, single-task completion time in this application is 140s, and single-task complete time in the PyWren model in the industry is 6190s. Completion of a single task in this application is 44 times faster than that in the PyWren model in the industry.

The foregoing describes the serverless system and the message management method. The following describes, with reference to the accompanying drawings, the message management apparatus and the scheduling apparatus provided in the embodiments of this application. The message management apparatus and the scheduling apparatus each may be a computer device or a virtual machine.

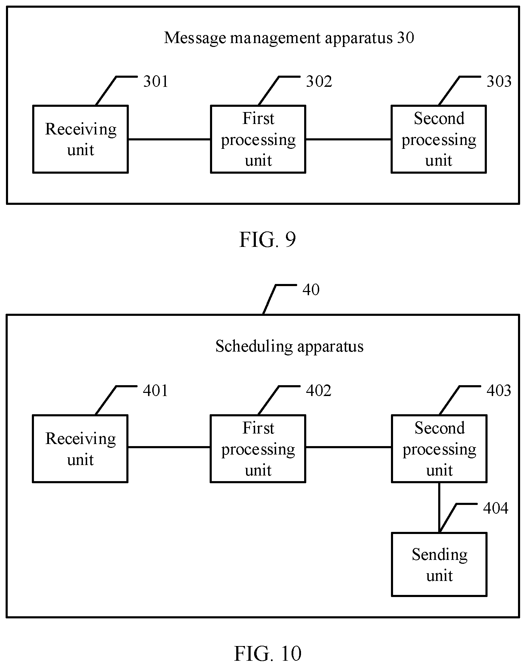

As shown in FIG. 9, an embodiment of a message management apparatus 30 provided in an embodiment of this application includes:

a receiving unit 301, configured to receive a first message, where the first message is used to indicate to schedule a first stateful function to operate a first state instance;

a first processing unit 302, configured to store the first message received by the receiving unit 301 in a first message queue corresponding to the first state instance, where the first message queue is used to store a plurality of messages, and each message is used to indicate one stateful function to operate the first state instance; and

a second processing unit 303, configured to: transfer a second message to a second stateful function corresponding to the second message, and run the second stateful function corresponding to the second message to operate the first state instance in an idle state, where the second message is a message located at a foremost end of the first message queue.

In the solutions provided in this embodiment of this application, time-shared operations performed by different stateful functions on the first state instance are controlled in a message management manner, and the second stateful function operates the first state instance only after the second message is scheduled to the second stateful function. Similarly, another stateful function associated with the first state instance operates the first state instance only after a corresponding message is scheduled to the stateful function. This prevents another stateful function from occupying a resource for waiting when a stateful function operates a state instance, thereby avoiding a resource waste, and improving resource utilization.

Optionally, the second processing unit 303 is further configured to: transfer, in parallel relative to the first message queue, a third message located at a foremost end of a second message queue to a third stateful function, and run the third stateful function to operate a second state instance in an idle state, where the second message queue corresponds to the second state instance.

Optionally, the second processing unit 303 is further configured to: after all messages in the first message queue and the second message queue are scheduled, transfer, in parallel, a fourth message located at a foremost end of a third message queue to a fourth stateful function, and run the fourth stateful function to operate the first state instance and the second state instance in an idle state, where the third message queue corresponds to the first state instance and the second state instance, and the fourth stateful function is located behind the first stateful function, the second stateful function, and the third stateful function in terms of a scheduling sequence.

As shown in FIG. 10, a scheduling apparatus 40 provided in an embodiment of this application is applied to a serverless system. The serverless system further includes a message management apparatus, a routing apparatus, and a plurality of working nodes. An embodiment of the scheduling apparatus 40 includes:

a receiving unit 401, configured to receive an address request sent by the routing apparatus, where the address request includes an identifier of a first state instance;

a first processing unit 402, configured to deploy the first state instance in a first working node in the plurality of working nodes based on the identifier that is of the first state instance and that is received by the receiving unit 401; and

a second processing unit 403, configured to: after the first processing unit 402 deploys the first state instance, establish a correspondence between the identifier of the first state instance and an address of the message management apparatus, where the message management apparatus corresponds to the first working node.

In the solutions provided in this embodiment of this application, when deploying the first state instance, the scheduling apparatus considers overhead information of the plurality of working nodes, a size of the first state instance, and a requirement policy of at least two stateful functions. In this way, performance of the serverless system can be improved.

Optionally, the first processing unit 402 is further configured to ship a first stateful function deployed in a second working node to the first working node, where shipping costs of the first stateful function are less than shipping costs of the first state instance.

Optionally, the address request further includes a function name of the first stateful function; and the first working node is determined based on the overhead information of the plurality of working nodes, the size of the first state instance, and the requirement policy of the at least two stateful functions, where the at least two stateful functions are located in a function service group associated with the function name of the first stateful function.

Optionally, the address request further includes a function name of the first stateful function; and the first working node is a working node with a highest total score in the plurality of working nodes, where a total score of a working node is related to a computing resource of the working node, a storage resource of the working node, or whether at least two stateful functions are deployed in the working node, and the at least two stateful functions are located in a function service group associated with the function name of the first stateful function.

Optionally, the serverless system further includes an address management apparatus, and a sending unit 404 is configured to send the correspondence between the identifier of the first state instance and the address of the message management apparatus corresponding to the first working node to the address management apparatus.

For the foregoing described message management apparatus 30 and scheduling apparatus 40, refer to the corresponding descriptions in the foregoing method embodiment part for understanding. Details are not described herein again.

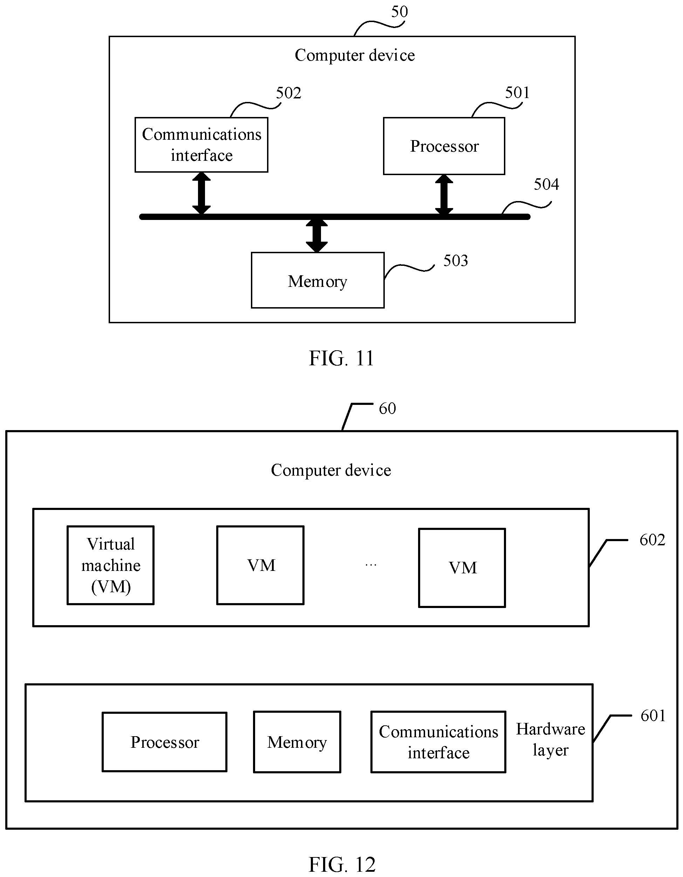

FIG. 11 is a schematic diagram of a possible logical structure of a computer device 50 according to an embodiment of this application. The computer device may be the foregoing message management apparatus 30 or scheduling apparatus 40. The computer device 50 includes a processor 501, a communications interface 502, a memory 503, and a bus 504. The processor 501, the communications interface 502, and the memory 503 are connected to each other by using the bus 504. In this embodiment of this application, the processor 501 is configured to control and manage an action of the computer device 50. For example, the processor 501 is configured to perform steps 101 to 105 in the method embodiment shown in FIG. 3 and steps 201 to 212 in the method embodiment shown in FIG. 7. The communications interface 502 is configured to support the computer device 50 in communication. The memory 503 is configured to store program code and data of the computer device 50. If the memory 503 stores program code and data of a function executed by the message management apparatus 30, the communications interface 502 in the computer device 50 executes the function of the receiving unit 301 for receiving the first message, and the processor 501 executes the functions of the first processor 302 and the second processor 303. If the memory 503 stores program code and data of a function executed by the scheduling apparatus 40, the communications interface 502 in the computer device 50 executes the function of the receiving unit 401, and the processor 501 executes the functions of the first processing unit 402 and the second processing unit 403.

The processor 501 may be a central processing unit, a general-purpose processor, a digital signal processor, a dedicated integrated circuit, a field programmable gate array or another programmable logic device, a transistor logic device, a hardware component, or any combination thereof, and may implement or execute various example logic blocks, modules, and circuits described with reference to the content disclosed in this application. Alternatively, the processor 501 may be a combination of processors implementing a computing function, for example, a combination of one or more microprocessors, or a combination of the digital signal processor and a microprocessor. The bus 504 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one thick line is used to represent the bus in FIG. 11, but this does not mean that there is only one bus or only one type of bus.

FIG. 12 is a schematic diagram of a possible logical structure of a computer device 60 according to an embodiment of this application. The computer device 60 includes a hardware layer 601 and a VM layer 602, and the VM layer may include one or more VMs. The hardware layer 601 provides a hardware resource for the VM to support running of the VM, and the hardware layer 601 includes hardware resources such as a processor, a communications interface, and a memory. When a VM executes a function of the message management apparatus 30, the communications interface in the hardware layer executes the function of the receiving unit 301 for receiving the first message, and the processor executes the functions of the first processor 302 and the second processor 303. When a VM executes a function of the scheduling apparatus 40, the communications interface in the computer device 50 executes the function of the receiving unit 401, and the processor executes the functions of the first processing unit 402 and the second processing unit 403. For a specific process in which different VMs execute functions of different apparatuses, refer to the foregoing corresponding descriptions in FIG. 3 to FIG. 7 for understanding.

In another embodiment of this application, a computer-readable storage medium is further provided. The computer-readable storage medium stores computer-executable instructions. When a processor of a device executes the computer-executable instructions, the device performs the message management method performed by the message management apparatus in FIG. 3 to FIG. 7.

In another embodiment of this application, a computer-readable storage medium is further provided. The computer-readable storage medium stores computer-executable instructions. When a processor of a device executes the computer-executable instructions, the device performs the message management method performed by the scheduling apparatus in FIG. 3 to FIG. 7.

In another embodiment of this application, a computer program product is further provided. The computer program product includes computer-executable instructions, and the computer-executable instructions are stored in a computer-readable storage medium. When a processor of a device executes the computer-executable instructions, the device performs the message management method performed by the message management apparatus in FIG. 3 to FIG. 7.

In another embodiment of this application, a computer program product is further provided. The computer program product includes computer-executable instructions, and the computer-executable instructions are stored in a computer-readable storage medium. When a processor of a device executes the computer-executable instructions, the device performs the message management method performed by the scheduling apparatus in FIG. 3 to FIG. 7.

In another embodiment of this application, a chip system is further provided. The chip system includes a processor, and the processor is configured to support an inter-process communications apparatus in implementing the message management method performed by the message management apparatus in FIG. 3 to FIG. 7. In a possible design, the chip system may further include a memory. The memory is configured to store necessary program instructions and data of the message management apparatus. The chip system may include a chip, or may include a chip and another discrete component.

In another embodiment of this application, a chip system is further provided. The chip system includes a processor, and the processor is configured to support an inter-process communications apparatus in implementing the message management method performed by the scheduling apparatus in FIG. 3 to FIG. 7. In a possible design, the chip system may further include a memory. The memory is configured to store necessary program instructions and data of the scheduling apparatus. The chip system may include a chip, or may include a chip and another discrete component.

A person of ordinary skill in the art may be aware that, in combination with the examples described in embodiments disclosed in this specification, the units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiment of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed systems, apparatuses, and methods may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be allocated on a plurality of network units. Some or all of the units may be selected according to actual needs to achieve the destinations of the solutions of the embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A serverless system, comprising a message management apparatus, wherein
   the message management apparatus is configured to:

   receive a first message, wherein the first message is used to indicate to schedule a first stateful function to operate a first state instance;
   store the first message in a first message queue corresponding to the first state instance, wherein the first message queue is used to store a plurality of messages, and each message is used to indicate one stateful function to operate the first state instance; and
   transfer a second message to a second stateful function corresponding to the second message, and run the second stateful function corresponding to the second message to operate the first state instance in an idle state, wherein the second message is a message located at a foremost end of the first message queue.

2. The serverless system according to claim 1, wherein the serverless system further comprises a routing apparatus, a scheduling apparatus, and a plurality of working nodes, wherein
   the scheduling apparatus is configured to:

   receive an address request sent by the routing apparatus, wherein the address request comprises an identifier of the first state instance;
   deploy the first state instance in a first working node in the plurality of working nodes based on the identifier of the first state instance; and

establish a correspondence between the identifier of the first state instance and an address of the message management apparatus, wherein the message management apparatus corresponds to the first working node.

3. The serverless system according to claim 2, wherein
   the scheduling apparatus is further configured to:
   ship the first stateful function deployed in a second working node to the first working node, wherein shipping costs of the first stateful function are less than shipping costs of the first state instance.

4. The serverless system according to claim 2 or 3, wherein the address request further comprises a function name of the first stateful function; and

   the first working node is determined based on overhead information of the plurality of working nodes, a size of the first state instance, and a requirement policy of at least two stateful functions, wherein the at least two stateful functions are located in a function service group associated with the function name of the first stateful function; or
   the first working node is a working node with a highest total score in the plurality of working nodes, wherein a total score of a working node is related to a computing resource of the working node, a storage resource of the working node, or whether at least two stateful functions are deployed in the working node, and the at least two stateful functions are located in a function service group associated with the function name of the first stateful function.

5. The serverless system according to any one of claims 1 to 4, wherein
   the message management apparatus is further configured to:
   transfer, in parallel relative to the first message queue, a third message located at a foremost end of a second message queue to a third stateful function, and run the third stateful function to operate a second state instance in an idle state, wherein the second message queue corresponds to the second state instance.

6. The serverless system according to claim 5, wherein
   the message management apparatus is further configured to:
   after all messages in the first message queue and the second message queue are scheduled, transfer, in parallel, a fourth message located at a foremost end of a third message queue to a fourth stateful function, and run the fourth stateful function to operate the first state instance and the second state instance in an idle state, wherein the third message queue corresponds to the first state instance and the second state instance, and the fourth stateful function is located behind the first stateful function, the second stateful function, and the third stateful function in terms of a scheduling sequence.

7. The serverless system according to any one of claims 2 to 4, wherein the serverless system further comprises an address management apparatus, wherein
   the scheduling apparatus is further configured to:

   send the correspondence between the identifier of the first state instance and the address of the message management apparatus to the address management apparatus; and
   the address management apparatus stores the correspondence.

8. The serverless system according to claim 7, wherein
   the routing apparatus is further configured to:

   receive a call request of a client for the first stateful function, wherein the call request comprises the identifier of the first state instance and the function name of the first stateful function;
   obtain the address that is of the message management apparatus and that corresponds to the identifier of the first state instance; and
   send the first message to the message management apparatus indicated by the address of the message management apparatus.

9. The serverless system according to claim 8, wherein
   the routing apparatus is configured to:

   obtain, from the scheduling apparatus, the address that is of the message management apparatus and that corresponds to the identifier of the first state instance; or
obtain, from the address management apparatus, the address that is of the message management apparatus and that corresponds to the identifier of the first state instance.

10. The serverless system according to any one of claims 2 to 9, wherein the message management apparatus is located in one of the plurality of working nodes, and the scheduling apparatus is located in a control node of the serverless system.

11. A message management method, comprising:

receiving a first message, wherein the first message is used to indicate to schedule a first stateful function to operate a first state instance;
storing the first message in a first message queue corresponding to the first state instance, wherein the first message queue is used to store a plurality of messages, and each message is used to indicate one stateful function to operate the first state instance; and
transferring a second message to a second stateful function corresponding to the second message, and running the second stateful function corresponding to the second message to operate the first state instance in an idle state, wherein the second message is a message located at a foremost end of the first message queue.

12. The method according to claim 11, wherein the method further comprises:
transferring, in parallel relative to the first message queue, a third message located at a foremost end of a second message queue to a third stateful function, and running the third stateful function to operate a second state instance in an idle state, wherein the second message queue corresponds to the second state instance.

13. The method according to claim 12, wherein the method further comprises:
after all messages in the first message queue and the second message queue are scheduled, transferring, in parallel, a fourth message located at a foremost end of a third message queue to a fourth stateful function, and running the fourth stateful function to operate the first state instance and the second state instance in an idle state, wherein the third message queue corresponds to the first state instance and the second state instance, and the fourth stateful function is located behind the first stateful function, the second stateful function, and the third stateful function in terms of a scheduling sequence.

14. A message management method, wherein the method is applied to a serverless system, the serverless system comprises a message management apparatus, a routing apparatus, a scheduling apparatus, and a plurality of working nodes, and the method comprises:

receiving an address request sent by the routing apparatus, wherein the address request comprises an identifier of a first state instance;
deploying the first state instance in a first working node in the plurality of working nodes based on the identifier of the first state instance; and
establishing a correspondence between the identifier of the first state instance and an address of the message management apparatus, wherein the message management apparatus corresponds to the first working node.

15. The method according to claim 14, wherein the method further comprises:
shipping a first stateful function deployed in a second working node to the first working node, wherein shipping costs of the first stateful function are less than shipping costs of the first state instance.

16. The method according to claim 14 or 15, wherein the address request further comprises a function name of the first stateful function; and

the first working node is determined based on overhead information of the plurality of working nodes, a size of the first state instance, and a requirement policy of at least two stateful functions, wherein the at least two stateful functions are located in a function service group associated with the function name of the first stateful function; or
the first working node is a working node with a highest total score in the plurality of working nodes, wherein a total score of a working node is related to a computing resource of the working node, a storage resource of the working node, or whether at least two stateful functions are deployed in the working node, and the at least two stateful functions are located in a function service group associated with the function name of the first stateful function.

17. The method according to any one of claims 14 to 16, wherein the serverless system further comprises an address management apparatus, and the method further comprises:
sending the correspondence between the identifier of the first state instance and the address of the message management apparatus to the address management apparatus.

18. A computer-readable storage medium, wherein a computer program is stored in the computer-readable storage medium, and when the computer program is executed by a processor, the method according to any one of claims 11 to 13 is implemented.

19. A computer-readable storage medium, wherein a computer program is stored in the computer-readable storage medium, and when the computer program is executed by a processor, the method according to any one of claims 14 to 17 is implemented.

20. A computing device, comprising a processor and a computer-readable storage medium that stores a computer program, wherein
the processor is coupled to the computer-readable storage medium, and when the computer program is executed by the processor, the method according to any one of claims 11 to 13 is implemented.

21. A computing device, comprising a processor and a computer-readable storage medium that stores a computer program, wherein
the processor is coupled to the computer-readable storage medium, and when the computer program is executed by the processor, the method according to any one of claims 14 to 17 is implemented.

22. A chip system, comprising a processor, wherein the processor is invoked to perform the method according to any one of claims 11 to 13.

23. A chip system, comprising a processor, wherein the processor is invoked to perform the method according to any one of claims 14 to 17.

Client

Control node 1

...

Control node X

Routing device

Working node 1

Working node 2

Working node 3

...

Working node M

Working node P

...

Working node S

FIG. 1

FIG. 2A

EP 4 191 413 A1

FIG. 2B

Control node 1
Scheduling apparatus

Working node 1
Message management apparatus 1

Working node 2

Working node 3
Message management apparatus 2

Working node M

Routing device (routing apparatus)

Address management apparatus

Client

101: Call request

Scheduling
apparatus

Routing
apparatus

Address management
apparatus

102: Receive the call
request, and obtain an
address that is of a message
management apparatus and
that corresponds to an
identifier of a first state
instance

*103: First message*

Message
management
apparatus

104: Enqueuing

First message queue

First stateful
function

*105: Transfer the second message*

First message

Second message

Second
stateful
function

First state
instance

FIG. 3

EP 4 191 413 A1

Scheduling apparatus

Register

Address management apparatus

Correspondence between a state ID and an endpoint

Subscribe

Message

Routing apparatus

Message management apparatus 1

State instance 1

State instance 2

Message management apparatus 2

State instance 3

State instance 4

FIG. 4A

FIG. 4B

FIG. 5A

FIG. 5B

FIG. 5C

Object storage server OBS

FIG. 6

| Client | Routing apparatus | Scheduling apparatus | Message management apparatus | Split function | Transfer function | Merge function | Address management apparatus |
|---|---|---|---|---|---|---|---|

201: Call request (func_split, state 01)

202: Determine whether a routing relationship exists

203: Address request (func_split, state 01)

204: Deploy a state instance, and determine an address of the message management apparatus

206: Correspondence (state 01, endpoint 1)

205: Correspondence (state 01, endpoint 1)

207: First message (func_split, state 01)

208: Perform queue management based on the state 01

TO FIG. 7B    TO FIG. 7B    TO FIG. 7B    TO FIG. 7B    TO FIG. 7B    TO FIG. 7B    TO FIG. 7B    TO FIG. 7B

FIG. 7A

EP 4 191 413 A1

EP 4 191 413 A1

CONT. FROM FIG. 7A    CONT. FROM FIG. 7A    CONT. FROM FIG. 7A    CONT. FROM FIG. 7A    CONT. FROM FIG. 7A    CONT. FROM FIG. 7A    CONT. FROM FIG. 7A    CONT. FROM FIG. 7A

209: Send the first message.

210: Split processing

211: Initiate a call request (func_trans, state 01) for a transfer function 1

Repeat 202 to 211 until transferring of the last video slice is completed

212: Initiate a call request (func_merge, state 01 to state x) for a merge function

Perform 202 to 211 until transcoded video slices in state instances of the state 01 to the state x are merged

FIG. 7B

Resource overheads of 1000 tests

FIG. 8A

Single-task completion time

FIG. 8B

Message management apparatus 30

Receiving unit — 301

First processing unit — 302

Second processing unit — 303

FIG. 9

— 40

Scheduling apparatus

Receiving unit — 401

First processing unit — 402

Second processing unit — 403

Sending unit — 404

FIG. 10

50

Computer device

502

Communications interface

501

Processor

504

Memory

503

**FIG. 11**

60

Computer device

Virtual machine (VM)

VM

...

VM

602

Processor

Memory

Communications interface

Hardware layer

601

**FIG. 12**

## INTERNATIONAL SEARCH REPORT

| International application No. |
| --- |
| **PCT/CN2021/082229** |

**A. CLASSIFICATION OF SUBJECT MATTER**

G06F 9/54(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC: 实例, 函数, 去服务器化, 无服务化, 函数即服务, 消息, 队列, instance, function, serverless, FAAS, message, queue

**C. DOCUMENTS CONSIDERED TO BE RELEVANT**

| Category* | Citation of document, with indication, where appropriate, of the relevant passages | Relevant to claim No. |
| --- | --- | --- |
| A | CN 108121608 A (HANGZHOU HUAWEI DIGITAL TECHNOLOGY CO., LTD.) 05 June 2018 (2018-06-05)<br>  description, paragraphs 5-22 | 1-23 |
| A | CN 105187327 A (GUANGDONG NENGLONG EDUCATION CO., LTD.) 23 December 2015 (2015-12-23)<br>  entire document | 1-23 |
| A | CN 110401696 A (HUAWEI TECHNOLOGIES CO., LTD.) 01 November 2019 (2019-11-01)<br>  entire document | 1-23 |
| A | CN 102904961 A (INSPUR (BEIJING) ELECTRONIC INFORMATION INDUSTRY CO., LTD.) 30 January 2013 (2013-01-30)<br>  entire document | 1-23 |
| A | US 2019332433 A1 (PAYPAL, INC.) 31 October 2019 (2019-10-31)<br>  entire document | 1-23 |

☐ Further documents are listed in the continuation of Box C.    ☑ See patent family annex.

| | |
| --- | --- |
| \*   Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **08 June 2021** | **22 June 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2021/082229** |

| Patent document cited in search report | | | Publication date (day/month/year) | Patent family member(s) | | | Publication date (day/month/year) |
| --- | --- | --- | --- | --- | --- | --- | --- |
| CN | 108121608 | A | 05 June 2018 | None | | | |
| CN | 105187327 | A | 23 December 2015 | None | | | |
| CN | 110401696 | A | 01 November 2019 | WO | 2020253786 | A1 | 24 December 2020 |
| CN | 102904961 | A | 30 January 2013 | None | | | |
| US | 2019332433 | A1 | 31 October 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010823536